# EUROPÄISCHE PATENTSCHRIFT

(11) **EP 3 180 284 B1**
(45) Veröffentlichungstag und Bekanntmachung des Hinweises auf die Patenterteilung: **24.08.2022**
(21) Anmeldenummer: 15744946.3
(22) Anmeldetag: 03.08.2015
(51) Int. Cl.: B66C 13/46, B66C 13/48, F03D 13/10

(54) **VERFAHREN UND ANORDNUNG ZUM INSTALLIEREN EINES ROTORBLATTES AN EINER WINDENERGIEANLAGE**
METHOD AND ARRANGEMENT FOR INSTALLING A ROTOR BLADE ON A WIND TURBINE
PROCÉDÉ ET ARRANGEMENT PERMETTANT D'INSTALLER UNE PALE DE ROTOR SUR UNE ÉOLIENNE

(30) Priorität: 12.08.2014 DE 102014215969
(43) Veröffentlichungstag der Anmeldung: 21.06.2017
(73) Patentinhaber: Wobben Properties GmbH, 26607 Aurich (DE)
(72) Erfinder: CONERS, Rolf, 26676 Elisabethfehn (DE); LAODA, Fiona, Jakarta (ID)
(74) Vertreter: Eisenführ Speiser
(86) Internationale Anmeldenummer: PCT/EP2015/067843
(87) Internationale Veröffentlichungsnummer: WO 2016/023781

(56) Entgegenhaltungen:
- EP-A1- 2 738 133
- EP-A2- 2 573 036
- WO-A1-2014/027201
- WO-A2-2011/137937
- WO-A2-2011/137937
- CN-U- 203 037 247
- US-A1- 2011 260 126
- US-A1- 2012 328 408
- US-A1- 2012 328 408

## Beschreibung

Die vorliegende Erfindung betrifft ein Verfahren zum Installieren von Komponenten, insbesondere eines Rotorblattes an einer Windenergieanlage. Es betrifft auch eine Installationsanordnung zum Installieren von Komponenten, insbesondere eines Rotorblattes an einer Windenergieanlage. Außerdem betrifft es einen Messaufnehmer zur Verwendung in einem Verfahren und/oder in einer Installationsanordnung zum Installieren von Komponenten insbesondere eines Rotorblattes an einer Windenergieanlage. Ferner betrifft die Erfindung eine satellitengestützte Lage- und Positionsanzeige.

Die Erfindung betrifft insbesondere eine Horizontalachsenwindenergieanlage, bei der ein Rotor mit einem, üblicherweise drei Rotorblättern um eine im Wesentlichen horizontale Achse dreht. Die Rotorblätter sind dabei an einer entsprechenden Nabe befestigt. Eine Möglichkeit, eine Windenergieanlage zu errichten besteht darin, Rotornabe und Rotorblätter getrennt, nämlich nacheinander zu installieren. Es wird dann also jeweils ein Rotorblatt an der bereits installierten oder zumindest vorinstallierten Nabe befestigt. Das Verfahren ist somit auch zum Austausch von Blättern anwendbar, einschließlich des Deinstallierens von Blättern. Es können aber auch andere Komponenten, besonders schwere Komponenten mit einem Gewicht von mehr als einer Tonne, wie ein Generator, eine Gondel, ein Maschinenträger oder eine Nabe installiert werden. Das Installieren an einer Windenergieanlage betrifft insoweit das Installieren an eine bis zu der entsprechenden zu installierenden Komponente aufgebauten Windenergieanlage.

Bei einer waagerechten Installation eines Rotorblattes, von der hier ausgegangen wird, wird das Rotorblatt am Aufstellungsort am Boden vorbereitet. Das beinhaltet natürlich auch ein Vorbereiten bspw. auf einem Tieflader. Hierzu gehört, das Rotorblatt an einem Kranseil zu befestigen. Außerdem können weitere Führungsseile an dem Rotorblatt befestigt werden, um hierüber das Rotorblatt zu führen oder zumindest führend eingreifen zu können.

Das Rotorblatt wird dann mit dem Kran hochgezogen und in seiner waagerechten Position mit seiner Blattwurzel so an die Nabe geführt, dass es dort in Empfang genommen und verschraubt werden kann.

Dazu zieht der Kranführer in bekannter Weise das Blatt hoch und bewegt es dann in die richtige Höhe und bewegt es zur Nabe. Durch die Führungsseile wird - vereinfachend ausgedrückt - dafür gesorgt, dass das Rotorblatt auch mit seiner Blattwurzel zur Nabe weist. Ggf. kann zudem eine Rotorblatttraverse vorgesehen sein, die es bspw. ermöglicht, das Rotorblatt um seine Längsachse zu drehen.

Insoweit ist hierbei auch vergleichsweise viel Handarbeit erforderlich. Meist wird der Kran manuell bedient, wobei dafür Kommandos oder Kommunikation über ein Funkgerät oder ähnlich erfolgen kann. Das Befestigen und vorherige Annehmen des Rotorblattes an der Nabe wird manuell koordiniert und durchgeführt. Wobei das manuelle Durchführen nicht bedeutet, dass keine Maschinen oder Werkzeuge zum Einsatz kommen. Ähnlich verhält es sich bei Verwendung von Führungsseilen, die vom Boden von Winden betätigt werden können.

Dabei ist zu beachten, dass ein solches Rotorblatt heutzutage einige Tonnen wiegen kann. Die Länge eines modernen Rotorblattes geht in den Bereich von 50 Metern und darüber. Auch Nabenhöhen liegen heutzutage häufig weit über 100 Metern und können bspw. auch 150 Meter betragen.

Die Koordination dieser Vorgänge wird basierend auf der Position und Ausrichtung des Rotorblattes im Grunde durch optische Erfassung durchgeführt. Das erfahrene Aufbaupersonal erkennt Höhe und Ausrichtung des Rotorblattes und steuert das Anheben und Ausrichten entsprechend. Bei der genauen Positionierung der Blattwurzel zur Nabe kann sich Servicepersonal, das sich an der Blattnabe aufhält, über Handzeichen oder per Funkgerät bemerkbar machen und den Kranführer oder dem Aufbaupersonal am Boden entsprechende Zeichen oder Anweisungen per Funk geben.

Problematisch hierbei ist, dass ein solcher Aufbau gutes Wetter verlangt. Weder bei Sturm noch bei schlechten Sichtverhältnissen ist ein solcher Aufbau derzeit möglich. Dabei ist zu beachten, dass schon mittelstarker Nebel dazu führen kann, dass anvisierte Naben und damit Installationshöhen von 100 bis 150 Metern ein Erkennen des Rotorblattes, geschweige denn seiner Ausrichtung, unmöglich machen können. Im Ergebnis gehören dazu gerade bei Installationen in höher gelegenen Gebieten auch tiefer hängende Wolken.

Ähnliche Probleme ergeben sich bei Sturm aber selbst schon bei geringeren Windgeschwindigkeiten. Selbst wenn der Wind schwach genug wäre, dass ein Installieren des Rotorblatts grundsätzlich möglich wäre, in dem es bspw. von am Boden stehenden Zugwinden ausreichend stark gehalten wird, erschwert aber die starke Variation des Windes mit der Höhe einen solchen Aufbauvorgang erheblich. Dabei ist zu beachten, dass die Windgeschwindigkeit am Boden, selbst in einigen Metern Höhe, deutlich geringer ist, als in 100 oder 150 Metern Höhe oberhalb des Bodens.

Im Ergebnis werden solche Blattinstallationen dann nur durchgeführt, wenn entsprechend gute Wetterbedingungen vorherrschen. Gerade in Gebieten mit starkem Wind und viel Nebel oder Regen, der auch die Sicht beeinträchtigen kann, wird es zunehmend schwerer, ausreichende Wetterbedingungen zum Installieren eines Rotorblattes oder anderer Komponenten vorzufinden. Entsprechend wird dann die Blattinstallation so gut wie möglich vorbereitet, um sie so schnell wie möglich durchführen zu können, sobald die Witterungsbedingungen das zulassen.

Eine solche Installation unter Zeitdruck kann natürlich problematisch für die Sicherheit sein und im Übrigen auch problematisch für die Qualität der Installation, also für eine beschädigungsfreie Installation.

In der US 2012/0328408 ist ein Verfahren und eine Vorrichtung beschrieben, um die Orientierung von großen Bauteilen zu kontrollieren, wenn diese an einem Lastseil eines Krans hängen. Zu diesem Zweck sind Führungsseile mit jeweils einer zugeordneten Winde vorgesehen sowie eine Steuerung, die Daten von Kraftsensoren empfängt und die Winden der Führungsseile steuert, um die Ausrichtung der Last zu kontrollieren.

Die EP 2 573 036 A2 betrifft ein Komponenten Handhabungssystem zur Verwendung in einer Windenergieanlage, wobei das Handhabungssystem insbesondere zur Installation oder Demontage einer Komponente eines Antriebsstrangs der Windturbine eingesetzt wird. Die Komponente ist zum Beispiel ein Getriebe. Mithilfe von Sensoren wird die relative Orientierung und Position der Komponente gegenüber einer Antriebswelle der Windturbine erfasst und auf einem Display dargestellt.

Das Deutsche Patent- und Markenamt hat in der Prioritätsanmeldung zu vorliegender Anmeldung folgenden Stand der Technik recherchiert: DE 10 2009 056 245 A1.

Der vorliegenden Erfindung liegt somit die Aufgabe zugrunde, zumindest eins der o.g. Probleme zu adressieren. Insbesondere soll eine Lösung vorgeschlagen werden, die das Installieren eines Rotorblattes bei ungünstigeren Wetterbedingungen als bisher ermöglicht. Zumindest soll gegenüber dem bisher Bekannten eine alternative Lösung vorgeschlagen werden.

Erfindungsgemäß wird ein Verfahren zum Installieren eines Rotorblatts gemäß Anspruch 1 vorgeschlagen. Es wird nachfolgend besonders am Beispiel eines Rotorblattes beschrieben. Die Verfahrensschritte und notwendigen Installationsmittel sind aber sinngemäß auch auf das Installieren anderer Komponenten anwendbar. Hierzu gehören der Generator, die Gondel, die Nabe, nämlich die Rotornabe, an der die Rotorblätter befestigt werden, und der Maschinenträger. Die Komponente, die auch ein Rotorblatt sein kann, wird somit an der Windenergieanlage installiert, soweit die Windenergieanlage schon aufgebaut ist. Jedenfalls wird die Komponente an einer teilweise aufgebauten Windenergieanlage installiert, die wenigstens einen aufgebauten Turm aufweist und die Komponente wird auf dem Turm oder oberhalb des Turmes installiert. Das Installieren beinhaltet auch das Montieren und die Erfindung betrifft somit das Montieren in gleichem Maße. Jegliche Ansprüche, Ausführungsformen und Erläuterungen, die das Installieren betreffen, sind auch Ansprüche, Ausführungsformen und Erläuterungen, die das Montieren betreffen.

Das vorgeschlagene Verfahren legt eine Windenergieanlage zugrunde, die, sobald sie denn fertig aufgebaut ist, wenigstens ein Rotorblatt aufweist. Ein solches Rotorblatt hat eine Blattwurzel zum Befestigen an der Nabe, also der Rotornabe sowie eine Blattspitze, also Rotorblattspitze und eine Längsachse zwischen Blattwurzel und Blattspitze. Auch andere Komponenten weisen Längsachsen auf, die zur Orientierung festgelegt werden können. Für den Generator, die Gondel, die Nabe und auch den Maschinenträger wird vorzugsweise die Drehachse des Generators als Längsachse gewählt. Für andere Komponenten als die Rotorblätter können ein vorderer Befestigungspunkt und ein hinterer Befestigungspunkt an die Stelle der Blattwurzel bzw. Blattspitze treten.

Für das beschriebene Rotorblatt werden nun die folgenden Verfahrensschritte vorgeschlagen. Zunächst wird das Rotorblatt mit einem Kran hochgezogen. Während es hochgezogen wird, werden Messdaten zu Position, Höhenposition und außerdem zur Ausrichtung des Rotorblattes aufgenommen. Dazu ist wenigstens ein Messmittel vorgesehen. Die Messdaten werden dann an eine Überwachungsstation oder Steuereinrichtung übertragen. Auf der Überwachungsstation werden die Position und/oder Ausrichtung der Komponente graphisch dargestellt.

Die Überwachungsstation kann bspw. die erhaltenen Messdaten in eine Visualisierung umsetzen, die auf einem Display die Lage und Position des Rotorblattes anzeigt.

Die Steuereinrichtung kann selbsttätig aus diesen Messdaten Steuerungsaktionen initiieren und ausführen. Wird bspw. gemessen, dass das Rotorblatt mit seiner Blattwurzel nicht zur Rotornabe weist, an der das Blatt befestigt werden soll, kann ein entsprechender Aktuator dem unmittelbar entgegenwirken, was nachfolgend noch anhand von Details weiter erläutert werden wird.

Somit wird hier vorgeschlagen, dass Ausrichten und Positionieren des Rotorblattes auf Sicht zu ersetzen oder zu ergänzen durch das Aufnehmen von Messwerten, die notwendige Informationen zum Ausrichten und Positionieren enthalten.

Hiermit kann zumindest erreicht werden, dass ein Rotorblatt oder andere zu installierende Komponenten nun auch, im Grunde in schwindelerregender Höhe am Kran schwebend, ohne Sichtkontakt ausgerichtet werden kann. Dadurch kann eine Installation des Rotorblattes bei schlechter Sicht durchgeführt werden. Hierdurch kann auch eine Installation des Rotorblattes bei Dunkelheit verbessert oder ermöglicht werden.

Vorzugsweise ist zum Aufnehmen wenigstens eines Teils der Messdaten ein Messaufnehmer am Rotorblatt angeordnet bzw. an der Komponente der Windenergieanlage angeordnet, die installiert werden soll. Dieser Messaufnehmer nimmt wenigstens eine der folgenden Größen auf:
- eine Höhenposition des Rotorblattes bzw. der anderen zu installierenden Komponente,
- eine Neigung der Längsachse des Rotorblattes bzw. der anderen zu installierenden Komponente,
- einer Ausrichtung der Längsachse in einer horizontalen Ebene,
- einer Drehposition des Rotorblattes bzw. der anderen zu installierenden Komponente um die Längsachse,
- Temperatur, insbesondere nämlich Umgebungstemperatur
- die Windgeschwindigkeit oder Windstärke im Bereich des Messaufnehmers und
- die Windrichtung im Bereich des Messaufnehmers.

Der Messaufnehmer kann somit Werte von einem oder mehreren Messmitteln aufnehmen, und weiter übertragen, z.B. zu einer Auswertevorrichtung, wie einer Steuereinrichtung oder Anzeigevorrichtung. Vorzugsweise umfasst der Messaufnehmer Messmittel. Messmittel können ein Messsensor sein oder einen oder mehrere Messsensoren beinhalten.

Der Messaufnehmer kann insbesondere sowohl in Längs- als auch in Querrichtung etwa mittig auf dem Rotorblatt angeordnet werden. Oder er kann etwa im Bereich des Schwerpunkts des Rotorblatts oder andere zu installierende Komponente und dabei vorzugsweise im Bereich der Befestigung mit dem Kran angeordnet werden. Bei Verwendung einer Rotorblatttraverse oder anderen Travers, wenn also das Rotorblatt mittels einer Rotorblatttraverse getragen wird, kann der Messaufnehmer auch an der Rotorblatttraverse oder anderen Traverse befestigt sein. Vorzugsweise sind dort auch seine Messmittel oder wenigstens ein Teil davon angeordnet.

Mit Hilfe der dort aufgenommenen Messdaten kann die Position und Ausrichtung des Rotorblatts bzw. einer anderen zu installierenden Komponente unmittelbar am oder zumindest in der Nähe des Rotorblatts vorgenommen werden. Die Erfassung der Höhenposition des Rotorblatts ermöglicht seine Position festzustellen und insbesondere an den Kran bzw. Kranführer zu übermitteln. Gleichzeitig kann sie an eine Zentralsteuerung und außerdem oder alternativ an einen Einsatzleiter übermittelt werden, der den Vorgang des Installierens des Rotorblatts koordiniert. Als Messmittel kann hierfür bspw. ein Drucksensor verwendet werden, der über den Luftdruck bzw. die Luftdruckabnahme die Höhe bestimmen kann. Auch andere Varianten wie eine Funkvermessung zum Boden kommen in Betracht.

Das Erfassen einer Neigung der Längsachse des Rotorblatts oder anderen Komponente ermöglicht, eine Neigung gegenüber einer waagerechten Ausrichtung zu erkennen und ggf. Gegenmaßnahmen einzuleiten. Die Erfassung der Ausrichtung der Längsachse des Rotorblatts und damit des Rotorblatts als solches in der horizontalen Ebene ermöglicht besonders auch, die Blattwurzel zur Nabe hin auszurichten, an der die Blattwurzel befestigt werden soll. Oder Befestigungsflansche anderer zu installierender Komponenten werden zu entsprechenden Flanschen ausgerichtet, an denen die Komponente zu installieren ist. Diese Ausrichtung der Längsachse in einer horizontalen Ebene betrifft somit die Ausrichtung im Sinne einer der Himmelsrichtungen bzw. eine Ausrichtung dazwischen. Unter einer Ausrichtung der Längsachse in einer horizontalen Ebene ist auch eine solche Ausrichtung im Sinne der vier Himmelsrichtungen zu verstehen, ohne dass die Längsachse selbst horizontal ausgerichtet ist und/oder in der horizontalen Ebene liegt, obwohl eine horizontale Ausrichtung der Längsachse bevorzugt ist.

Eine Drehposition des Rotorblatts oder einer anderen Komponente um seine Längsachse wird vorteilhafterweise aufgenommen, um das Rotorblatt in dieser Hinsicht auf die Rotornabe auszurichten. Es kann aber auch hilfreich sein, das Rotorblatt je nach Wind in dieser Hinsicht so auszurichten, dass dem Wind möglichst wenig Angriffsfläche gegeben wird.

Die Erfassung der Neigung der Längsachse, besonders des Rotorblatts als auch die Erfassung der Drehposition des Rotorblatts oder anderer Komponenten um seine Längsachse kann mit einem Neigungssensor, insbesondere einem sog. X-Y-Neigungssensor erfasst werden.

Für die Ausrichtung in der horizontalen Ebene wird vorteilhafterweise ein Satellitenkompass eingesetzt. Es können dann im Grunde alle drei Winkel des Rotorblatts bzw. einer anderen Komponente ermittelt werden, nämlich Neigung der Längsachse, Ausrichtung der Längsachse in der Horizontalen und Drehposition des Rotorblatts bzw. der anderen Komponente um die Längsachse.

Eine Temperaturerfassung durch diesen Messaufnehmer, der also im Bereich des Rotorblatts wenigstens ein Messmittel umfasst, in diesem Fall nämlich einen Temperatorsensor, kann besonders bei winterlichen Witterungsverhältnissen um den Gefrierpunkt von Bedeutung sein. Hier kann es vorkommen, dass sich die Temperatur bspw. 100 Meter oberhalb des Bodens von der Temperatur am Boden unterscheidet. Besonders in der Nähe des Gefrierpunktes kann dies zu dem Risiko eines Eisansatzes führen, auf den die Temperaturverhältnisse am Boden weniger schließen lassen würden, oder umgekehrt.

Ähnlich verhält es sich für die Windgeschwindigkeit oder Windstärke im Bereich des Rotorblattes, die in großer Höhe wie etwa im Bereich von 100 bis 150 Metern eine ganz andere als am Boden sein kann. Die Windgeschwindigkeit kann hier insbesondere höher als am Boden sein. Entsprechend kann durch die Messaufnahme am Rotorblatt eine bessere Information über die Umgebungsbedingungen im Bereich des Rotorblatts gegeben werden.

Ähnliches gilt für die Messung einer Windrichtung. Auch diese kann in hoher Höhe anders ausgebildet sein, als am Boden. Dabei sind die Zustände im Bereich des Rotorblattes, besonders wenn es bereits etwa auf Nabenhöhe angehoben wurde, wichtiger als die am Boden.

Eine weitere Ausführungsform schlägt vor, wenigstens einen Teil der Messdaten über einen mit der Blattspitze und/oder der Blattwurzel verbundenen Messsensor aufzunehmen. Ein solcher Messsensor kann ein Kraftsensor, insbesondere Zugkraftsensor sein, der dort eine Kraft oder Zugkraft zwischen Blattwurzel und einem Führungsseil bzw. Blattspitze und einem anderen Führungsseil erfasst. Besonders wenn das jeweilige Führungsseil am Boden mit einer Winde verbunden ist und dort auch mit einer gewissen Spannung gehalten werden kann, kann der Kraftsensor bzw. Zugsensor eine entsprechende Zugkraft zwischen Blattwurzel und Führungsseil bzw. Winde aufnehmen. In gleicher Weise kann eine entsprechende Zugkraft zwischen Blattspitze und Führungsseil bzw. Winde aufgenommen werden. Dadurch können Bewegungen des Rotorblatts bzw. einer anderen Komponente erfasst werden. Es kann aber auch eine Führung des Rotorblatts über solche Führungsseile verbessert werden. An einem Beispiel veranschaulichend ausgedrückt, kann über solche Sensoren an den Führungsseilen besser entschieden werden, ob im Falle eines Rotorblatts mit einer starken Neigung der Längsachse besser an der tiefhängenden Stelle mit dem Führungsseil nachgegeben wird, oder an der höher hängenden Stelle des Rotorblatts mit dem dort befestigten Führungsseil eine Zugkraft ausgeübt wird.

Mittels solcher Kraftaufnehmer, die auch als Messlaschen bezeichnet werden können, lassen sich somit Kräfte in den Führungsseilen verfolgen. Dadurch kann die Überwachung der Installation verbessert werden.

Vorzugsweise weisen die jeweiligen Sensoren, also insbesondere ein in der Blattmitte befestigter Messaufnehmer, als auch an den Führungsseilen oder in ähnlichen Positionen angeordnete Kraftaufnehmer vereinheitlichte Ausgangsschnittstellen auf. Bspw. kann eine Ausgangsschnittstelle mit einem Messsignalausgang von 4 bis 20 mA verwendet werden. Hierdurch kann eine Weiterverarbeitung mit bekannten Geräten erleichtert werden. Außerdem oder alternativ kann eine Funkübertragung erfolgen, mit normierten Datenprotokollen. Dadurch ist zum Einen eine Universalität erreichbar und zum Anderen eine Ermittlung und Auswertung an mehreren Orten, Positionen und/oder Geräten gleichzeitig möglich. So kann sowohl der Kranführen als auch der Einsatzleiter am Boden dasselbe Bild von der Situation erhalten. Gleichzeitig können die Daten zumindest zum Teil an Steuergeräte übertragen werden, wie insbesondere Winden zum Führen der Führungsseile. Im Falle der Verwendung einer entsprechenden Hebetraverse kann auch diese direkte Messdaten erhalten und in eine Steuerung einfließen lassen.

Vorzugsweise werden die Messdaten oder zumindest ein Teil davon an einer Überwachungsstation ausgewertet und abhängig davon erfolgt die Ausrichtung des Rotorblatts.

Vorzugsweise werden Messwerte mehrerer Sensoren, die am Rotorblatt angeordnet sind, an einen gemeinsamen Knotenpunkt, insbesondere an ein gemeinsames Funkübertragungsmittel geführt. Insbesondere Werte eines Satellitenkompass, der auch als GPS-Kompass bezeichnet werden kann, eines X-Y-Neigungssensors und eines Höhensensors können an einen solchen gemeinsamen Knoten, also insbesondere Funkübertragungsmittel, übertragen werden, bspw. leitungsgebunden über ein auf 4 bis 20 mA normiertes Stromsignal. Auch die Werte der Zugkraftsensoren bzw. Kraftsensoren können dorthin übertragen werden, wobei eine Funkübertragung aufgrund einer großen Entfernung zu den Sensoren an Blattspitze und Blattwurzel vorgenommen werden kann. Vorzugsweise weist ein in der Mitte des Blatts angeordneter Messaufnehmer, sei es nun geometrische Mitte oder Schwerpunkt, einen solchen Funkübertragungsknoten auf.

Die weitere Übertragung erfolgt dann so, dass diese aufgenommenen Daten gebündelt von dem Funkübertragungsknoten an einen entsprechenden Empfangsknoten übersandt werden. Ein solcher Empfangsknoten ist vorzugsweise in einer am Boden stationierten Überwachungsstation angeordnet. Dort kann eine Auswertung und/oder eine weitere Übertragung bspw. über WLAN erfolgen, um die Daten oder einen Teil davon an weitere Geräte, insbesondere Endgeräte wie Laptop oder sogar Smartphone, zu übertragen.

Eine bevorzugte Ausführungsform schlägt somit auch vor, dass an der Blattwurzel und der Blattspitze oder an entsprechenden Befestigungspunkten anderer Komponenten jeweils wenigstens ein Führungsseil befestigt ist und nach unten zum Boden geführt wird und abhängig der übermittelten und/oder ausgewerteten Messdaten die Neigung und/oder Ausrichtung in der horizontalen Ebene über wenigstens eines dieser Führungsseile vorgenommen wird.

Vorzugsweise werden Positionsdaten des Rotorblatts an Winden zum Steuern der Führungsseile gegeben. Vorzugsweise arbeiten die Winden basierend auf solchen Positionsdaten automatisch. Dazu können die entsprechenden Daten bei den Winden oder zuvor von einer zentralen Auswerteeinheit ausgewertet werden. Insbesondere kommen Auswertungen, wie Berechnung von Differenzen zwischen vorhandener und angestrebter Position in Betracht. Sowohl Daten zur Höhe, als auch Ausrichtung des Rotorblatts können zu einer entsprechenden Ansteuerung der Winden führen. Selbst die Windgeschwindigkeit oder auch Windrichtung kann hier zusätzlich verwendet werden. Bspw. wird vorgeschlagen, dass bei stärkerem Wind die Winden jeweils eine höhere Kraft auf das Rotorblatt ausüben, um das Blatt stärker im Wind zu fixieren oder zumindest still zu halten. Bei schwächerem Wind kann mit entsprechend weniger Zugkraft gearbeitet werden.

Vorteilhaft ist es auch, wenn auf einer bzw. der Überwachungsstation Randbedingungen wie Windstärke, Windrichtung und/oder Temperatur angezeigt werden. Besonders die drei Winkel der Blattausrichtung, nämlich Neigung der Längsachse, Ausrichtung der Längsachse in der horizontalen Ebene und Drehposition des Rotorblatts um die Längsachse können graphisch entsprechend dargestellt werden. Das erleichtert zum Einen die Überwachung und Erkennung der tatsächlich gerade vorliegenden Position und Ausrichtung des Blatts. Außerdem kann es auch die Kommunikation vereinfachen und schafft dabei die Möglichkeit, etwaige Nachjustierungen direkt quantitativ zu erfassen.

Randbedingungen wie Temperatur, Windrichtung und Windstärke können als Zahlen oder auch graphisch aufbereitet dargestellt werden. Besonders die Windrichtung kann in vorteilhafterweise in Bezug auf die Ausrichtung des Rotorblatts in der horizontalen Ebene dargestellt werden, z.B. relativ zu der für die Befestigung des Blatts angestrebten Ausrichtung der Längsachse.

Auch die von den Zugkraftsensoren aufgenommene Kraft kann jeweils als Zahl oder graphisch, bspw. als Balkendiagramm dargestellt werden. Die Darstellung als Balkendiagramm oder andere analoge Darstellung kann besonders für eine Gegenüberstellung der beiden Kräfte, nämlich an der Blattwurzel und der Blattspitze vorteilhaft sein. Ergänzend kann durch Farben auch die Darstellung für Warnhinweise benutzt werden, wie bspw. eine zu große Kraft oder eine zu starke Neigung kann durch eine rote oder andere Signalfarbe hervorgehoben werden.

Vorteilhafterweise werden somit die Messdaten an den Kran, zum Boden und/oder an eine Steuereinrichtung, wie bspw. wenigstens eine Winde zum Beeinflussen der Ausrichtung, übertragen. Günstig ist es, wenn der Kran und/oder die wenigstens eine Winde automatische basierend auf den übermittelten Messdaten Position und/oder Ausrichtung verändern. Durch die vorgeschlagene Aufnahme von Messdaten, insbesondere mit Messaufnehmern und/oder Messmitteln, die unmittelbar am Rotorblatt angeordnet sind, stehen nun Daten zur Verfügung, die auch eine verlässliche Automatisierung der Steuerung oder eines Teils der Steuerung zulassen. Eine Neigung oder Ausrichtung in der horizontalen Ebene kann bspw. unmittelbar zu entsprechenden Aktionen der Seilwinden führen, die die beiden Führungsseile steuern. Ähnliches gilt für andere Ausrichtungen wie die Neigung des Blatts. Auch das Anheben des Rotorblatts auf die geeignete Höhe kann hierdurch automatisiert werden.

Vorzugsweise sind diese Messaufnehmer und/oder Messmittel lösbar an dem Rotorblatt oder anderen Komponente befestigt. Hierdurch kann ein vorteilhaftes System zum Erfassen der gewünschten Messdaten vorgesehen werden, das durch die Lösbarkeit für jedes Blatt neu verwendet werden kann. Die Befestigung kann durch lösbare Verklebung, Verschraubung oder über Verwendung eines oder mehrerer Saugnäpfe erfolgen. Das Lösen kann mit Hilfe des Krans erfolgen, und außerdem oder alternativ durch entsprechend automatisierte Lösungsvorrichtungen durchgeführt werden.

Erfindungsgemäß wird auch eine Installationsanordnung zum Installieren eines Rotorblatts gemäß Anspruch 7 vorgeschlagen. Eine solche Installationsanordnung umfasst einen Kran zum Anheben und Hochziehen des Rotorblatts bzw. einer anderen Komponente, wenigstens einen Messaufnehmer zum Aufnehmen von Messdaten zu Position und/oder Ausrichtung des Rotorblatts und wobei der Messaufnehmer dazu vorbereitet ist, die Messdaten an wenigstens eine Überwachungsstation und/oder Steuereinrichtung zum Steuern der Position und/oder Ausrichtung des Rotorblatts zu übermitteln. Insbesondere ist diese Installationsanordnung dazu vorbereitet, ein Verfahren zum Installieren eines Rotorblatts gemäß wenigstens einer der vorstehend erläuterten Ausführungsformen auszuführen. Insoweit wird auch für die Erläuterungen der einzelnen Messmittel und Auswerteeinheiten sowie Übertragungseinheiten auf die Erläuterungen der einzelnen Ausführungsformen der oben beschriebenen Verfahren verwiesen.

Vorzugsweise umfasst der Messaufnehmer wenigstens ein Messmittel aus der folgenden Liste:
- ein am Rotorblatt oder anderen Komponente befestigtes und als Luftdrucksensor ausgebildetes Messmittel zum Erfassen einer Höhenposition des Rotorblattes bzw. der anderen Komponente,
- ein am Rotorblatt oder anderen Komponente befestigtes und als Neigungssensor ausgebildetes Messmittel, zum Erfassen einer Neigung einer Längsachse des Rotorblattes bzw. der anderen Komponente,
- ein am Rotorblatt oder anderen Komponente befestigtes und als Neigungssensor ausgebildetes Messmittel, zum Erfassen einer Drehposition des Rotorblattes um die Längsachse,
- ein am Rotorblatt oder anderen Komponente befestigtes und als GPS-Empfänger ausgebildetes Messmittel, zum Erfassen einer Ausrichtung des Rotorblattes in einer horizontalen Ebene,
- ein mit der Blattspitze des Rotorblattes oder einem ersten Befestigungspunkt einer anderen Komponente verbundenes Messmittel, insbesondere Zugkraftsensor und
- ein mit der Blattwurzel des Rotorblattes oder einem zweiten Befestigungspunkt einer anderen Komponente verbundenes Messmittel, insbesondere Zugkraftsensor.

Vorzugsweise ist zudem eine Auswertevorrichtung zum Auswerten, Darstellen und/oder Weiterleiten der Messdaten an weitere Darstellungs- und/oder Steuergeräte vorgesehen. Durch diese Auswertevorrichtung, die eine zentrale Einheit für die Installationsanordnung darstellen kann, können die Messdaten zentral verarbeitet und ggf. auch angezeigt werden. Eine Weiterleitung macht die Berücksichtigung oder unmittelbare Verwendung zum Steuern möglich. Hier kommt auch in Betracht, nur einen Teil der Informationen weiterzuleiten, insbesondere kommt in Betracht, gerade an Steuereinrichtungen nur die dafür benötigten Daten weiterzuleiten oder bereits die Messdaten weiter so aufzubereiten oder auszuwerten, dass Steuereinheiten unmittelbare Steuersignale erhalten.

Vorzugsweise ist eine Funkübertragungseinrichtung vorgesehen, die Messdaten vom Rotorblatt zu einer Empfangseinrichtung überträgt, nämlich per Funk. Somit wird gezielt eine Funkübertragung vorgesehen, die auch die zu übertragenden Daten bündeln kann. Die Datenverarbeitung kann hierdurch vereinfacht werden. Die Funkübertragung umfasst somit eine Sendeeinrichtung und eine Empfangseinrichtung. In der Sendeeinrichtung werden die zu übertragenden Daten vorzugsweise von mehreren Sensoren gebündelt und gemeinsam übertragen. Entsprechend werden die Daten in der Empfangseinrichtung wieder separiert und/oder weitergeleitet.

Die Installationsanordnung nach einem der Ansprüche 10 bis 15, umfasst eine satellitengestützte Lage- und Positionsanzeige zum Anzeigen der Lage und/oder Position des Rotorblattes oder einer anderen Komponente.

Außerdem wird eine Vorrichtung zum Anzeigen der Lage und/oder Position eines Rotorblattes oder einer anderen Komponente gemäß Anspruch 16 vorgeschlagen. Diese umfasst einen Sensor zum Aufnehmen einer satellitengestützten Lage und/oder Position, wobei der Sensor zum Befestigen an einem Rotorblatt oder an einer anderen Komponente vorbereitet ist, eine Anzeige zum Anzeigen der Lage und/oder Position des Rotorblattes bzw. der anderen Komponente und ein Übertragungsmittel zum Übertragen von Daten einer vom Rotorblatt bzw. der anderen Komponente aufgenommenen Lage und/oder Position an die Anzeigevorrichtung.

Dadurch kann ein Benutzer die aktuelle Lage und/oder Position des Rotorblattes bzw. der anderen Komponente bei der Installation sehen und die Installation besser steuern.

Diese Vorrichtung zum Anzeigen der Lage und/oder Position eines Rotorblattes oder anderen Komponente ist auch Vorbereitet zur Verwendung in einem Verfahren zum Installieren eines Rotorblatts oder anderen Komponente und/oder zur Verwendung in einer Installationsanordnung (1) zum Installieren eines Rotorblatts oder anderen Komponente gemäß wenigstens einer der vorstehend beschriebenen Ausführungsformen. Die Vorrichtung zum Anzeigen der Lage und/oder Position eines Rotorblattes oder anderen Komponente kann auch eines oder mehrere der Merkmale aufweisen, die im Zusammenhang mit wenigstens einer der vorstehend beschriebenen Ausführungsformen zur Erfassung, Übermittlung und/oder Verarbeitung von Positions- und/oder Lagedaten beschrieben wurden.

Nachfolgend wird die Erfindung nun anhand einer Ausführungsform exemplarisch unter Bezugnahme auf die begleitenden Figuren näher erläutert.
- Figur 1: zeigt eine Windenergieanlage in einer perspektiven Ansicht.
- Figur 2: zeigt in einer schematischen Darstellung eine Installationsanordnung zum Installieren eines Rotorblatts.
- Figur 3: zeigt eine Struktur verwendeter Sensoren einer Installationsanordnung, nebst einer Überwachungsstation und der Kommunikation dazwischen.
- Figur 4: zeigt eine mögliche Art der Darstellung von Ausrichtung und Lage eines Rotorblatts basierend auf ausgewerteten Messdaten.

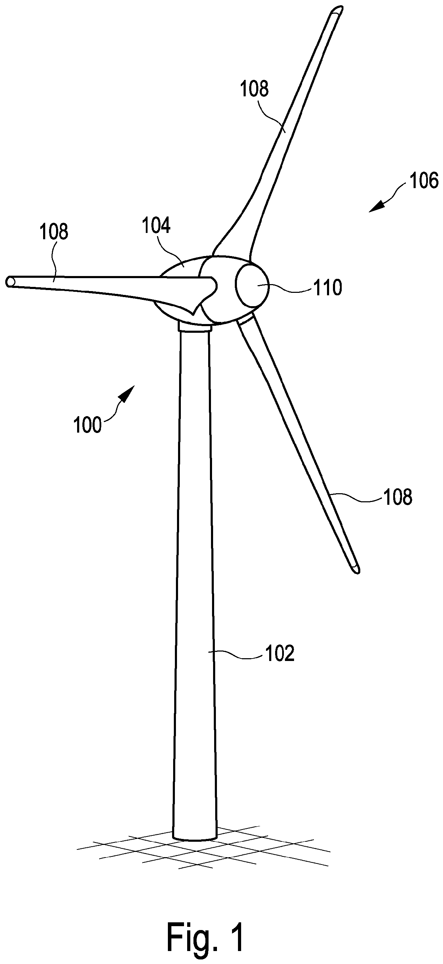

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

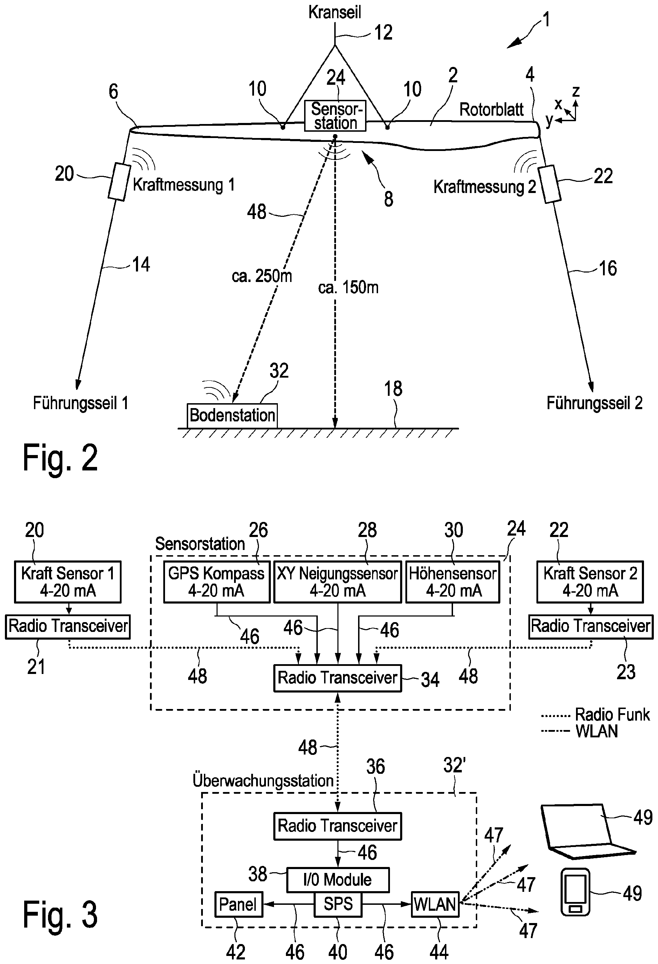

Figur 2 zeigt schematisch eine Installationsvorrichtung 1 und veranschaulicht ein bereits zur Installation an einer Rotornabe angehobenes Rotorblatt 2. Das Rotorblatt hängt im Wesentlichen waagerecht, was generell, nicht nur in der gezeigten Ausführungsform, die gewünschte Ausrichtung ist. Das Rotorblatt weist dabei eine Blattwurzel 4 und eine Blattspitze 6 auf, die beide hier aber nur schematisch dargestellt sind. In einem mittleren Bereich 8 des Rotorblatts 2 ist das Rotorblatt 2 an zwei Befestigungspunkten 10 aufgehängt und hängt im Wesentlichen an einem Kranseil 12.

An der Blattspitze 6 ist ein erstes Führungsseil 14 und an der Blattwurzel 4 ein zweites Führungsseil 16 angeordnet, um das Rotorblatt 2 vom Boden 18 aus besonders in seiner Ausrichtung führen zu können.

Jedes Führungsseil 14 bzw. 16 weist einen Kraftsensor 20 bzw. 22 auf. Über den ersten bzw. zweiten Kraftsensor 20, 22 kann jeweils eine Zugkraft zwischen dem ersten bzw. zweiten Führungsseil 14, 16 und der Blattspitze bzw. Blattwurzel 6, 4 aufgenommen werden.

Im mittleren Bereich 8 des Rotorblatts 2 ist eine Sensorstation 24 angeordnet, die hier einen Messaufnehmer bildet. Die Sensorstation umfasst als Messmittel einen GPS-Kompass 26, einen X-Y-Neigungssensor 28 und einen Höhensensor 30, wie die Struktur der Figur 3 zeigt.

Der GPS-Kompass 26 kann die Ausrichtung des Rotorblatts 2 in einer waagerechten Ebene erfassen, kann also die Ausrichtung in Bezug auf die vier Himmelsrichtungen erfassen, um es anschaulich auszudrücken.

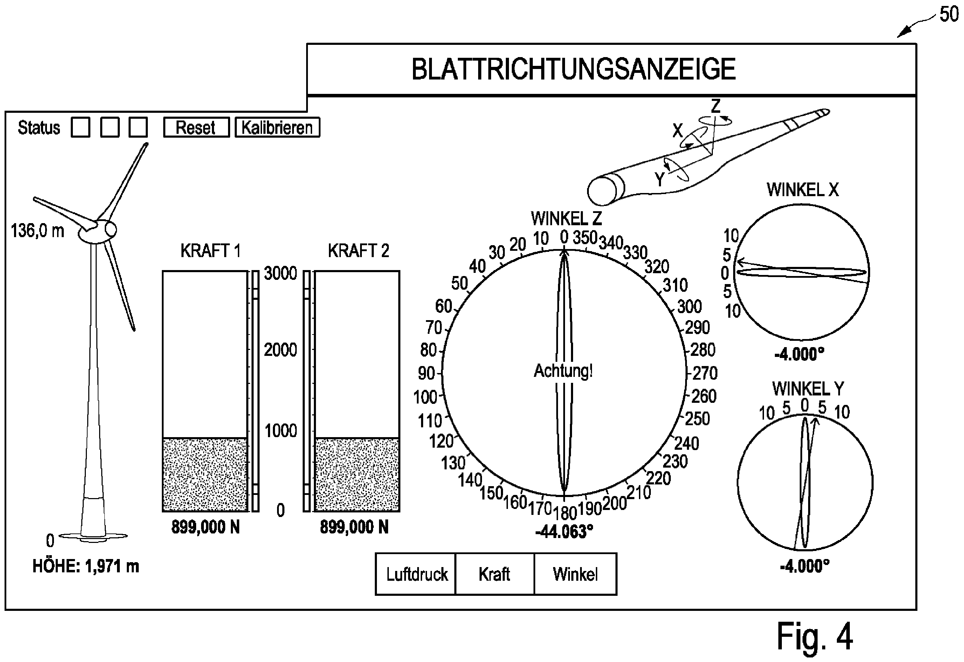

Der X-Y-Neigungssensor 28 kann die Neigung des Rotorblatts bzw. seiner Längsachse erfassen und er kann ebenfalls eine Drehung bzw. einen geringen Drehwinkel des Rotorblatts um seine Längsachse herum erfassen. Aus Sicht des Neigungssensors 28 sind dies zwei Drehkoordinaten, die insbesondere rechtwinklig zueinander stehen. Zusammen mit dem GPS-Kompass 26 können somit Ausrichtungswinkel des Rotorblatts in Bezug auf insbesondere drei kartesische Koordinaten erfasst werden. Dies veranschaulicht im Übrigen in der Anzeige 50 gemäß Figur 4 das Ausrichtungssymbol 52, das diese drei Neigungs- bzw. Drehachsen x, y und z darstellt.

Die Sensorstation 24 hat außerdem die Aufgabe, Werte von den beiden Kraftsensoren 20 und 22 zu empfangen. Die beiden Kraftsensoren 20 und 22 weisen dazu jeweils einen Funkübertrager 21 bzw. 23 auf. Figur 3 veranschaulicht die Struktur dazu und Figur 2 veranschaulicht die Entfernung, die zwischen den Kraftsensoren 20 bzw. 22 und der Sensorstation 24 besteht.

Die Sensorstation 24 übertragt dann ihre Daten weiter zu einer Bodenstation 32, die auf dem Boden 18 angeordnet ist. Das Rotorblatt 2 und damit die Sensorstation 24 können sich bspw. in einer Höhe von 150 Metern über dem Boden 18 befinden.

Figur 3 verdeutlicht eine interne Struktur der Sensorstation, die weiterhin einen Funkübertrager 34 aufweist. Der Funkübertrager 34, der wegen seiner Funktion auch als Sammelfunkübertrager 34 bezeichnet werden kann, erhält, jedenfalls gemäß der Ausführungsform der Figur 3, leitungsgebundene Signale von dem GPS-Kompass 26, dem X-Y-Neigungssensor 28 und dem Höhensensor 30. Diese drei Sensoren können mehrere Daten bspw. jeweils über ein Signal im Bereich von 4 bis 20 mA dem Funkübertrager 34 bereitstellen. Die Funkübertrager 21 und 23 senden selbst ihre Informationen zu dem Funkübertrager 34. Der Funkübertrager 34 empfängt somit Messdaten von fünf Sensoren, wobei zumindest der Neigungssensor 28 Daten zu zwei Größen übersendet, nämlich der Neigung der Blattachse sowie der Drehung des Rotorblatts um die Blattachse.

Diese Daten werden somit in dem Funkübertrager 34 zunächst empfangen und ggf. vorverarbeitet, jedenfalls aber über eine weitere Funkverbindung zu einer Überwachungsstation 32' übertragen. Die Überwachungsstation 32' kann der Bodenstation 32 gemäß Figur 2 entsprechen.

Die Überwachungsstation 32' beinhaltet, wie Figur 3 zeigt, ihrerseits einen Funkübertrager 36, der als Basisfunkübertrager 36 bezeichnet werden kann und der in erster Linie per Funk übertragene Daten von dem Funkübertrager 34 der Sensorstation 24 aufnimmt. Der Basisfunkübertrager 36 der Überwachungsstation 32' kann aber auch Signale zurück zur Sensorstation 24 übertragen, wie bspw. Fehlersignale, sollte es Probleme bei der Funkübertragung geben, oder andere Protokolldaten.

In der Überwachungsstation 32' erfolgt dann eine weitere Übertragung der Daten leitungsgebunden an ein Eingangs-Ausgangsmodul 38, das eine weitere Aufbereitung und Verteilung der Daten einleiten kann. Über ein SPS-Modul 40, nämlich ein Modul mit speicherprogrammierbarer Steuerung, kann eine Übertragung der Daten oder einer Auswahl der Daten an ein Bedienfeld 42 durchgeführt werden. Außerdem können Daten oder ein Teil davon an ein Netzwerkmodul 44 übertragen werden. Das Netzwerkmodul 44 kann insbesondere als drahtloses Netzwerkmodul ein drahtloses Netzwerk aufbauen und weitere Endgeräte wie einen Laptop, ein Surfacegerät oder andere Geräte übertragen.

Vorteilhafterweise verwendet die Struktur gemäß Figur 3 drei Übertragungsarten, nämlich eine leitungsgebundene Übertragung 46, eine Übertragung per WLAN 47 und eine Übertragung per Funk 48, also drahtlos aber anders als über bekannte WLAN-Technik. Die Übertragung per WLAN 47 erfolgt insbesondere zu den symbolisch dargestellten Endgeräten 49.

Die Anzeige 50 der Figur 4 zeigt neben dem Ausrichtungssymbol 52 ein Windenergieanlagensymbol 54, das insbesondere die zu erreichende Höhe, in dem Beispiel 136 Meter, anzeigt. Neben den Windenergieanlagensymbol 54 sind zwei Balkendiagramme 56 und 58, die die aufgenommene Kraft des ersten bzw. zweiten Kraftsensors 20, 22 gemäß Figur 2 sowohl in einem Balken veranschaulichen, als auch jeweils einen gemessenen Wert als Zahl ausgeben.

Oberhalb des Windenergieanlagensymbols 54 befindet sich eine Statusanzeige und daneben die Möglichkeit die Sensoren zu kalibrieren, was durch das Kalibrierfeld 60 angezeigt wird.

Ein Kalibrieren kann insbesondere für einen Luftdrucksensor in Betracht kommen, der im Übrigen zusätzlich noch als weiteres Messmittel in der Sensorstation 24 aufgenommen oder mit ihr verbunden sein kann, um insbesondere wetterbedingte Luftdruckschwankungen kompensieren zu können. Eine Kalibrierung, bzw. ein Abgleichen, kann dann vorgenommen werden, wenn das Rotorblatt noch nicht angehoben ist und sich noch im Wesentlichen am Boden befindet. Dieses Kalibrieren bzw. Abgleichen kann auch in Bezug auf die Höhenlage des Aufstellungsorts vorgenommen werden, bzw. dadurch notwendig werden.

Unterhalb des Ausrichtungssymbols 52 sind die konkreten Werte der Ausrichtung der drei Koordinaten x, y und z im Einzelnen durch entsprechende Diagramme dargestellt, die sowohl eine analoge, als auch eine digitale Darstellung mit genauer Angabe des jeweiligen Winkels bereitstellen. Dies sind die Z-Winkel-Anzeige, die die Ausrichtung der Längsachse in einer horizontalen Ebene zeigt, die X-Winkel-Anzeige 64, die die Neigung des Rotorblatts bzw. die Neigung der Längsachse des Rotorblatts zeigt, und die Y-Winkel-Anzeige 66, die einen Drehwinkel des Rotorblatts um seine eigene Achse zeigt.

Es wird somit eine Aufbauhilfe für die Rotorblattmontage vorgeschlagen. Hiermit wird es möglich, auch ohne freie Sicht ein Rotorblatt in die Höhe zu heben und zu montieren. Dazu steht auch eine Rotorblattlage- und positionsanzeige zur Verfügung, die auf Messdaten aufbaut.

Mit einem Satellitenkompass und einem X-Y-Neigungssensor werden somit alle drei Drehwinkel des Rotorblatts ermittelt, nämlich insbesondere alle drei möglichen kartesischen Drehwinkel. Die Höhenermittlung, also die vertikale Lage des Rotorblatts, erfolgt mit einem Luftdrucksensor. Mittels Kraftaufnehmern, die auch als Messlasche bezeichnet werden können, lassen sich Kräfte in den Führungsseilen verfolgen. Besonders die Sensoren, die leitungsgebunden mit einer Funkübertragung 34 in der Sensorstation 24 verbunden sind, können bspw. über ein Messsignal von 4 bis 20 mA ihre Informationen an diese Funkübertragung 34, bzw. Sammelfunkübertragung 34 weitergeben. Im Übrigen kann bspw. die Sensorstation 24 auch noch einen Luftdrucksensor beinhalten. Dessen Werte können über eine Angabe der Höhe oder direkt als Luftdruckwerte weitere Verwendung finden.

Die Kraftaufnehmer 20 bzw. 22 der Führungsseile 14 bzw. 16 senden ihre Werte mittels Funkübertragung an die Sensorstation 24. Von dort werden alle Messwerte, im Falle der Figur 3 sind das 6 Messwerte bzw. 6 Messsignale, mit einer weiteren Funkübertragung an die Bodenstation 32 bzw. Überwachungsstation 32' gesendet. Dort werden die Messwerte in einer speicherprogrammierbaren Steuerung ausgewertet und auf einem Bedienfeld zur Anzeige gebracht.

Über WLAN und einen FTP-Server, was durch das WLAN-Übertragungsmodul 47 veranschaulicht wird, werden die Daten von der Bodenstation 32 bzw. Überwachungsstation 32' weiter gesendet. Es ist dann möglich bspw. mit einem Laptop oder anderen WLANfähigen Gerät insbesondere mit einem ganz normalen Internetbrowser das gleiche Bild anzuzeigen, wie auf dem Bedienfeld 42 der Bodenstation 32 bzw. der Überwachungsstation 32'. Hiermit kann auch weiteres Bodenpersonal den Verlauf des Installationsvorgangs verfolgen.

## Patentansprüche

1. Verfahren zum Installieren eines Rotorblatts (2) an einer Windenergieanlage (100), wobei das Rotorblatt eine Blattwurzel (4) zum Befestigen des Rotorblattes (2) an einer Nabe und eine der Blattwurzel (4) abgewandte Blattspitze (6) sowie eine Längsachse aufweist, wobei die Längsachse von der Blattwurzel (4) zur Blattspitze (6) verläuft und
das Verfahren die Schritte umfasst:
- Hochziehen der Komponente (2) mit einem Kran,
- Aufnehmen von Messdaten zu Position, Höhenposition, Neigung der Längsachse, Ausrichtung der Längsachse in einer horizontalen Ebene und Drehposition des Rotorblatts (2) um die Längsachse des Rotorblatts (2) mit wenigstens einem Messmittel (20, 22, 26, 38, 30) während dem Hochziehen, wobei wenigstens ein Teil der Messdaten über Zugsensoren aufgenommen werden, wobei ein Zugsensor (20) in einem Führungsseil (14) angeordnet ist, das mit einer Blattspitze (6) des Rotorblattes (2) verbunden ist und ein anderer Zugsensor (22) ) in einem Führungsseil (16) angeordnet ist, das mit einer Blattwurzel (4) des Rotorblattes (2) verbunden ist, wobei die Führungsseile (14,16) nach unten zum Boden (18) geführt werden,
- Übermitteln der Messdaten an wenigstens eine Überwachungsstation (32) zum Überwachen des Hochziehens und an wenigstens eine Steuereinrichtung zum Steuern der Position und/oder Ausrichtung der Komponente (2), wobei abhängig von den übermittelten und/oder ausgewerteten Messdaten die Neigung und/oder Ausrichtung in der horizontalen Ebene über wenigstens eines der Führungsseile (14, 16) vorgenommen wird und
- graphisches Darstellen der in den Führungsseilen herrschenden Kräfte sowie der Position und winkelmäßigen Ausrichtung der Längsachse des Rotorblatts (2) in einer horizontalen Ebene, eine Neigung der Längsachse aus der horizontalen Ebene und eine Drehung um die Längsachse auf der Überwachungsstation (32).

2. Verfahren nach Anspruch 1,
**dadurch gekennzeichnet, dass**
zum Aufnehmen wenigstens eines Teils der Messdaten ein Messmittel (20, 22, 26, 38, 30) oder das wenigstens eine Messmittel (20, 22, 26, 38, 30) an der Komponente (2) oder in seiner Nähe angeordnet ist und Messdaten aufnimmt zu wenigstens einer Größe aus der Liste umfassend
- einen Luftdruck an der Komponente (2),
- Temperatur,
- die Windgeschwindigkeit oder Windstärke im Bereich des Messmittels und
- die Windrichtung im Bereich des Messmittels.

3. Verfahren nach einem der Ansprüche 1 oder 2,
**dadurch gekennzeichnet, dass**
die Messdaten an der Überwachungsstation (32) ausgewertet werden und abhängig der Auswertung eine Ausrichtung der Komponente (2) verändert wird.

4. Verfahren nach einem der vorstehenden Ansprüche,
**dadurch gekennzeichnet, dass**
auf der Überwachungsstation (32) Randbedingungen wie Windstärke, Windrichtung und/oder Temperatur angezeigt werden.

5. Verfahren nach einem der vorstehenden Ansprüche,
**dadurch gekennzeichnet, dass**
die Messdaten an den Kran, zum Boden (18) und/oder an eine Steuereinrichtung wie z.B. wenigstens eine Winde zum Beeinflussen der Ausrichtung der Komponente (2) übertragen werden.

6. Verfahren nach einem der vorstehenden Ansprüche,
**dadurch gekennzeichnet, dass**
der Kran und/oder die wenigstens eine Winde automatisch basierend auf den übermittelten Messdaten Position und/oder Ausrichtung verändern.

7. Installationsanordnung (1) zum Installieren eines Rotorblatts (2) an einer Windenergieanlage (100), wobei das Rotorblatt eine Blattwurzel (4) zum Befestigen des Rotorblattes (2) an einer Nabe und eine der Blattwurzel (4) abgewandte Blattspitze (6) sowie eine Längsachse aufweist, wobei die Längsachse von der Blattwurzel (4) zur Blattspitze (6) verläuft und
die Installationsanordnung (1) umfasst:
- einen Kran zum Anheben und Hochziehen der Komponente (2),
- wenigstens einen Messaufnehmer (24) zum Aufnehmen von Messdaten zu Position, Neigung der Längsachse, Ausrichtung der Längsachse in einer horizontalen Ebene und Drehposition des Rotorblatts (2) um die Längsachse des Rotorblatts (2) während dem Hochziehen, wobei wenigstens ein Teil der Messdaten über Zugssensoren aufgenommen werden, die mit einer Blattspitze (6) des Rotorblattes (2) bzw. mit einer Blattwurzel (4) des Rotorblattes (2) verbunden sind,
- der Messaufnehmer (24) einen an dem Rotorblatt (2) befestigten Luftdrucksensor zum Erfassen einer Höhenposition des Rotorblatts (2) umfasst, wobei
- der Messaufnehmer (24) vorbereitet ist zum Übermitteln der Messdaten an wenigsten eine Überwachungsstation (32) und eine Steuereinrichtung zum Steuern der Position und/oder Ausrichtung der Komponente (2), wobei der Messaufnehmer (24) einen an dem Rotorblatt (2) befestigten Neigungssensor (28) zum Erfassen einer Neigung (x) einer Längsachse des Rotorblatts (2), einer Drehposition (y) des Rotorblatts (2) um die Längsachse sowie einen mit der Blattspitze (6) des Rotorblattes (2) verbundenen Zugkraftsensor (20) und einen mit der Blattwurzel (4) des Rotorblattes (2) verbundenen Zugkraftsensor (22) umfasst, wobei an einem vorderen Befestigungspunkt an der Blattwurzel (4) und einem hinteren Befestigungspunkt an der Blattspitze (6) jeweils wenigstens ein Führungsseil (14, 16) befestigt ist und nach unten zum Boden (18) geführt wird, wobei in jedem Führungsseil (14, 16) einer der Zugkraftsensoren (20, 22) angeordnet ist, und abhängig von den übermittelten und/oder ausgewerteten Messdaten die Neigung und/oder Ausrichtung in der horizontalen Ebene über wenigstens eines dieser Führungsseile (14, 16) vorgenommen wird und wobei
- die Überwachungsstation dazu eingerichtet ist, die Position und Ausrichtung der Längsachse des Rotorblatts (2) in einer horizontalen Ebene, eine Neigung der Längsachse aus der horizontalen Ebene und eine Drehung um die Längsachse sowie der Kräfte in den Führungsseilen auf der Überwachungsstation (32) graphisch darzustellen.

8. Installationsanordnung (1) nach Anspruch 7, dazu vorbereitet, ein Verfahren nach einem der Ansprüche 1 bis 6 auszuführen.

9. Installationsanordnung (1) nach einem der Ansprüche 7 oder 8,
**dadurch gekennzeichnet, dass**
der wenigstens eine Messaufnehmer (24) ein Messmittel (20, 22, 26, 38, 30) umfasst,
- das als GPS-Empfänger zum Erfassen einer Ausrichtung des Rotorblatts (2) in einer horizontalen Ebene (z) ausgebildet ist.

10. Installationsanordnung (1) nach einem der Ansprüche 7 bis 9,
**gekennzeichnet durch**
eine Auswertevorrichtung (32) zum Auswerten, Darstellen und/oder Weiterleiten der Messdaten an weitere Darstellungs- und/oder Steuergeräte.

11. Installationsanordnung (1) nach einem der Ansprüche 7 bis 10,
**gekennzeichnet durch**
eine Funkübertragungseinrichtung (34) zum Übertragen der Messdaten vom Rotorblatt (2) zu einer Empfangseinrichtung (36).

12. Installationsanordnung nach einem der Ansprüche 7 bis 11, umfassend
- satellitengestützte Lage- und Positionsanzeige zum Anzeigen der Lage und/oder Position des Rotorblatts (2).

## Claims

1. Method for installing a rotor blade (2) on a wind turbine (100),
wherein the rotor blade has a blade root (4) for fastening the rotor blade (2) to a hub and a blade tip (6) facing away from the blade root (4) and a longitudinal axis, wherein the longitudinal axis runs from the blade root (4) to the blade tip (6) and the method comprises the steps of:
- hoisting the component (2) using a crane,
- recording measurement data relating to the position, height position, inclination of the longitudinal axis, orientation of the longitudinal axis in a horizontal plane and rotational position of the rotor blade (2) about the longitudinal axis of the rotor blade (2) using at least one measuring means (20, 22, 26, 38, 30) during the hoisting,
wherein at least some of the measurement data is recorded via tensile sensors, wherein one tensile sensor (20) is arranged in a guide rope (14), which is connected to a blade tip (6) of the rotor blade (2) and another tensile sensor (22) is arranged in another guide rope (16) which is connected to a blade root (4) of the rotor blade (2), wherein the guide ropes (14,16) are guided downwardly to the ground (18),
- transmitting the measurement data to at least one monitoring station (32) for monitoring the hoisting and to at least one control facility for controlling the position and/or orientation of the component (2), wherein the inclination and/or orientation in the horizontal plane is set via at least one of the guide ropes (14, 16) on the basis of the transmitted and/or evaluated measurement data and
- forces prevailing in the guide ropes are illustrated in graphic form as well as the position and angular orientation of the longitudinal axis of the rotor blade (2) in a horizontal plane, an inclination of the longitudinal axis from the horizontal plane and a rotation about the longitudinal axis at the monitoring station (32).

2. Method according to Claim 1,
**characterized in that**
in order to record at least some of the measurement data, a measuring means (20, 22, 26, 38, 30) or the at least one measuring means (20, 22, 26, 38, 30) is arranged on the component (2) or in the vicinity thereof and records measurement data relating to at least one variable from the list comprising
- an air pressure at the component (2),
- temperature,
- the wind speed or wind strength in the region of the measuring means, and
- the wind direction in the region of the measuring means.

3. Method according to one of the claims 1 or 2,
**characterized in that**
the measuring data is evaluated at the monitoring station (32) and an orientation of the component (2) is changed on the basis of the evaluation.

4. Method according to one of the preceding claims,
**characterized in that**
at the monitoring station (32) boundary conditions such as wind strength, wind direction and/or temperature are displayed.

5. Method according to one of the preceding claims,
**characterized in that**
the measurement data is transmitted to the crane, to the ground (18) and/or to a control facility, such as at least one winch for influencing the orientation of the component (2).

6. Method according to one of the preceding claims,
**characterized in that**
the crane and/or the at least one winch changes/change position and/or orientation automatically on the basis of the transmitted measurement data.

7. Installation arrangement (1) for installing a rotor blade (2) on a wind turbine (100), wherein the rotor blade has a blade root (4) for fastening the rotor blade (2) to a hub and a blade tip (6) facing away from the blade root (4) and a longitudinal axis, wherein the longitudinal axis runs from the blade root (4) to the blade tip (6) and the installation arrangement (1) comprises:
- a crane for lifting and hoisting the component (2),
- at least one transducer (24) for recording measurement data relating to position, inclination of the longitudinal axis, orientation of the longitudinal axis in a horizontal plane and rotational position of the rotor blade (2) about the longitudinal axis of the rotor blade (2) during the hoisting, wherein at least some of the measurement data is recorded via tensile sensors, which are connected to a blade tip (6) of the rotor blade (2) and to a blade root (4) of the rotor blade (2), respectively,
- the transducer (24) comprises an air pressure sensor fastened to the rotor blade (2) for detecting a height position of the rotor blade (2), wherein
- the transducer (24) is set up to transmit the measurement data to at least one monitoring station (32) and one control facility for controlling the position and/or orientation of the component (2), wherein
the transducer (24) comprises an inclination sensor (28) fastened to the rotor blade (2) for detecting an inclination (x) of a longitudinal axis of the rotor blade (2), a rotational position (y) of the rotor blade (2) about the longitudinal axis, as well as a tensile force sensor (20) connected to the blade tip (6) of the rotor blade (2) and a tensile force sensor (22) connected to the blade root (4) of the rotor blade (2), wherein
at least one guide rope (14, 16) is fastened to a front fastening point on the blade root (4) and at least one guide rope (14, 16) is fastened to a rear fastening point on the blade tip (6) and is guided downwardly to the ground (18), wherein
one of the tensile force sensors (20,22) is arranged in each guide rope (14,16), and the inclination and/or orientation in the horizontal plane is set via at least one of these guide ropes (14, 16) on the basis of the transmitted and/or evaluated measurement data, and wherein
- the monitoring station is arranged to graphically display the position and orientation of the longitudinal axis of the rotor blade (2) in a horizontal plane, an inclination of the longitudinal axis from the horizontal plane and a rotation about the longitudinal axis as well as the forces in the guide ropes on the monitoring station (32).

8. Installation arrangement (1) according to Claim 7, set up to carry out a method according to one of Claims 1 to 6.

9. Installation arrangement (1) according to one of Claims 7 or 8,
**characterized in that**
the at least one transducer (24) comprises a measuring means (20, 22, 26, 38, 30)
- which is formed as a GPS receiver for detecting an orientation of the rotor blade (2) in a horizontal plane (z).

10. Installation arrangement (1) according to one of Claims 7 to 9, **characterized by**
an evaluation apparatus (32) for evaluating, presenting and/or forwarding the measurement data to further presentation and/or control facilities.

11. Installation arrangement (1) according to one of Claims 7 to 10, **characterized by**
a radio transmission facility (34) for transmitting the measurement data from the rotor blade (2) to a receiving facility (36).

12. Installation arrangement according to one of Claims 7 to 11, comprising
- a satellite-assisted location and position display for displaying the location and/or position of the rotor blade (2).

## Revendications

1. Procédé d'installation d'une pale de rotor (2) au niveau d'une éolienne (100), dans lequel la pale de rotor présente une emplanture de pale (4) pour la fixation de la pale de rotor (2) à un moyeu et une extrémité de pale (6) éloignée de l'emplanture de pale (4) ainsi qu'un axe longitudinal, dans lequel l'axe longitudinal s'étend de l'emplanture de pale (4) à l'extrémité de pale (6) et
le procédé comporte les étapes :
- le soulèvement du composant (2) avec une grue,
- l'enregistrement de données de mesure de position, position en hauteur, inclinaison de l'axe longitudinal, orientation de l'axe longitudinal dans un plan horizontal et position rotative de la pale de rotor (2) autour de l'axe longitudinal de la pale de rotor (2) avec au moins un moyen de mesure (20, 22, 26, 38, 30) pendant le soulèvement, dans lequel au moins une partie des données de mesure est enregistrée par le biais de capteurs de traction, dans lequel un capteur de traction (20) est agencé dans un câble de guidage (14) qui est relié à une extrémité de pale (6) de la pale de rotor (2) et un autre capteur de traction (22) est agencé dans un câble de guidage (16) qui est relié à une emplanture de pale (4) de la pale de rotor (2), dans lequel les câbles de guidage (14, 16) sont guidés vers le bas jusqu'au sol (18),
- la transmission des données de mesure à au moins un poste de surveillance (32) pour la surveillance du soulèvement et à au moins un dispositif de commande pour la commande de la position et/ou de l'orientation du composant (2), dans lequel en fonction des données de mesure transmises et/ou évaluées, l'inclinaison et/ou l'orientation dans le plan horizontal est entreprise par le biais d'au moins un des câbles de guidage (14, 16) et
- la représentation graphique des forces régnant dans les câbles de guidage ainsi que de la position et de l'orientation en angle de l'axe longitudinal de la pale de rotor (2) dans un plan horizontal, une inclinaison de l'axe longitudinal hors du plan horizontal et une rotation autour de l'axe longitudinal sur le poste de surveillance (32).

2. Procédé selon la revendication 1,
**caractérisé en ce que**
pour l'enregistrement d'au moins une partie des données de mesure, un moyen de mesure (20, 22, 26, 38, 30) ou l'au moins un moyen de mesure (20, 22, 26, 38, 30) est agencé au niveau du composant (2) ou à sa proximité et enregistre des données de mesure d'au moins une grandeur de la liste comprenant
- une pression d'air au niveau du composant (2),
- une température,
- la vitesse du vent ou la force du vent dans la zone du moyen de mesure et
- le sens du vent dans la zone du moyen de mesure.

3. Procédé selon l'une quelconque des revendications 1 ou 2,
**caractérisé en ce que**
les données de mesure sont évaluées au niveau du poste de surveillance (32) et une orientation du composant (2) est modifiée en fonction de l'évaluation.

4. Procédé selon l'une quelconque des revendications précédentes,
**caractérisé en ce que**
des conditions limites telles que la force du vent, le sens du vent et/ou la température sont affichées sur le poste de surveillance (32).

5. Procédé selon l'une quelconque des revendications précédentes,
**caractérisé en ce que**
les données de mesure sont transmises à la grue, jusqu'au sol (18) et/ou à un dispositif de commande tel qu'un treuil destiné à influer sur l'orientation du composant (2).

6. Procédé selon l'une quelconque des revendications précédentes,
**caractérisé en ce que**
la grue et/ou l'au moins un treuil modifie automatiquement la position et/ou l'orientation sur la base des données de mesure transmises.

7. Agencement d'installation (1) pour l'installation d'une pale de rotor (2) au niveau d'une éolienne (100), dans lequel la pale de rotor présente une emplanture de pale (4) pour la fixation de la pale de rotor (2) à un moyeu et une extrémité de pale (6) éloignée de l'emplanture de pale (4) ainsi qu'un axe longitudinal, dans lequel l'axe longitudinal s'étend de l'emplanture de pale (4) à l'extrémité de pale (6) et
l'agencement d'installation (1) comporte :
- une grue pour le levage et le soulèvement du composant (2),
- au moins une sonde de mesure (24) pour l'enregistrement de données de mesure de position, inclinaison de l'axe longitudinal, orientation de l'axe longitudinal dans un plan horizontal et position rotative de la pale de rotor (2) autour de l'axe longitudinal de la pale de rotor (2) pendant le soulèvement, dans lequel au moins une partie des données de mesure est enregistrée par le biais de capteurs de traction qui sont reliés à une extrémité de pale (6) de la pale de rotor (2) ou à une emplanture de pale (4) de la pale de rotor (2),
- la sonde de mesure (24) comporte un capteur de pression d'air fixé à la pale de rotor (2) pour la détection d'une position en hauteur de la pale de rotor (2), dans lequel
- la sonde de mesure (24) est préparée pour la transmission des données de mesure à au moins un poste de surveillance (32) et un dispositif de commande pour la commande de la position et/ou de l'orientation du composant (2), dans lequel la sonde de mesure (24) comporte un capteur d'inclinaison (28) fixé à la pale de rotor (2) pour la détection d'une inclinaison (x) d'un axe longitudinal de la pale de rotor (2), une position rotative (y) de la pale de rotor (2) autour de l'axe longitudinal ainsi qu'un capteur de force de traction (20) relié à l'extrémité de pale (6) de la pale de rotor (2) et un capteur de force de traction (22) relié à l'emplanture de pale (4) de la pale de rotor (2), dans lequel respectivement au moins un câble de guidage (14, 16) est fixé en un point de fixation avant sur l'emplanture de pale (4) et un point de fixation arrière sur l'extrémité de pale (6) et est guidé vers le bas jusqu'au sol (18), dans lequel un des capteurs de force de traction (20, 22) est agencé dans chaque câble de guidage (14, 16), et en fonction de données de mesure transmises et/ou évaluées, l'inclinaison et/ou l'orientation dans le plan horizontal est entreprise par le biais d'au moins un de ces câbles de guidage (14, 16) et dans lequel
- le poste de surveillance est conçu afin de représenter graphiquement la position et l'orientation de l'axe longitudinal de la pale de rotor (2) dans un plan horizontal, une inclinaison de l'axe longitudinal hors du plan horizontal et une rotation autour de l'axe longitudinal ainsi que des forces dans les câbles de guidage sur le poste de surveillance (32).

8. Agencement d'installation (1) selon la revendication 7, préparé afin de réaliser un procédé selon l'une quelconque des revendications 1 à 6.

9. Agencement d'installation (1) selon l'une quelconque des revendications 7 ou 8,
**caractérisé en ce que**
l'au moins une sonde de mesure (24) comporte un moyen de mesure (20, 22, 26, 38, 30)
- qui est réalisé comme récepteur GPS pour la détection d'une orientation de la pale de rotor (2) dans un plan horizontal (z).

10. Agencement d'installation (1) selon l'une quelconque des revendications 7 à 9,
**caractérisé par**
un dispositif d'évaluation (32) pour l'évaluation, la représentation et/ou la transmission des données de mesure à d'autres appareils de représentation et/ou de commande.

11. Agencement d'installation (1) selon l'une quelconque des revendications 7 à 10,
**caractérisé par**
un dispositif de radiotransmission (34) pour la transmission des données de mesure de la pale de rotor (2) à un dispositif de réception (36).

12. Agencement d'installation selon l'une quelconque des revendications 7 à 11, comprenant
- l'affichage de situation et de position assisté par satellite pour l'affichage de la situation et/ou de la position de la pale de rotor (2).
